# EUROPEAN PATENT SPECIFICATION

(11) **EP 1 424 435 B1**
(45) Date of publication and mention of the grant of the patent: **04.07.2007**
(21) Application number: 03396102.0
(22) Date of filing: 14.11.2003
(51) Int. Cl.: D21C 11/06, D21C 11/12, B01D 3/34, B01D 53/56, B01D 53/58

(54) **Method of reducing nitrogen oxide emissions in a chemical pulp mill**
Verfahren zur Reduktion von NOX-Emissionen in einer chemischen Zellstoff-Fabrik
Procédé pour reduire les emissions d'oxyde d'azote dans une usine de pâte à papier chimique

(30) Priority: 20.11.2002 FI 20022073
(43) Date of publication of application: 02.06.2004
(73) Proprietor: Andritz Oy, 00180 Helsinki (FI)
(72) Inventor: Saviharju, Kari, 02340 Espoo (FI); Eneberg, Henrik, 00680 Helsinki (FI); Jaakkola, Heikki, 00270 Helsinki (FI); Lammentausta, Sakari, 02230 Espoo (FI); Mattelmäki, Esko, 06100 Porvoo (FI); Schönberg, Ake, 10640 Dragsvik (FI); Honkanen, Risto, 02600 Espoo (FI)
(74) Representative: Sorvari, Marjut Riitta Tuulikki

(56) References cited:
- WO-A-99/47746
- FI-A- 973 617
- US-A- 4 001 374
- US-A- 4 336 102
- US-A- 5 450 892
- DATABASE WPI Section Ch, Week 198042 Derwent Publications Ltd., London, GB; Class E36, AN 1980-74191C XP002276197 & JP 55 114333 A (MITSUBISHI HEAVY IND CO LTD), 3 September 1980 (1980-09-03)

## Description

The present invention relates to a method for recovering ammonia from material flows in a chemical pulp mill, and consequently for reducing nitrogen oxide emissions.

In sulphate pulping, wood is treated in white liquor containing sodium hydroxide and sodium sulphide, whereby lignin is hydrolyzed. Thereby, numerous organic sulphur compounds are formed, such as methylmercaptan, dimethylsulphide and dimethyldisulphide. These very compounds together with hydrogen sulphide are the cause of the unpleasant smell of the discharge gases from chemical pulp mills. These gases are formed in several phases during a chemical pulping process, such as in the digestion plant and evaporation of waste liquor. Malodorous sulphur compounds are most typically removed by collecting malodorous gases from various sources and burning them either in a lime kiln or a separate combustion device. During the burning, all sulphur-containing substances are oxidized to sulphur dioxide, sulphur trioxide, and, in the presence of alkali, also to sodium sulphate, and they are passed into flue gases. Sulphur dioxide is also generated at other locations in the chemical pulping process, e.g. in combustion of black liquor.

In addition to sulphur compounds, digestion generates also methanol and ammonia. Vapors containing sulphur compounds, ammonia and methanol are released abundantly e.g. in black liquor evaporation, where these compounds are distilled and condensed to condensates in a multi-stage evaporation plant. Foul condensates are usually purified in a steam stripper, wherein the condensate and the steam are made into contact and the impurities are transferred from the condensate into the steam, while the condensate stream thus purified is led to further use. Discharge vapor from the stripper is led via secondary condensation to combustion or directly to liquefaction of methanol. Non-condensable gases (NCG) are combusted together with the mill's malodorous gas flow.

The aim in the burning of malodorous gases is to oxidize the reduced sulphur compounds contained in the gas, such as hydrogen sulphide, sulphur dioxide, and therefore the combustion must take place in the presence of a remarkable volume of excess air (e.g. about 3 - 4%) and at a high temperature. Then ammonia contained in the malodorous gas is oxidized to nitrogen oxides.

Finnish patent 105215 discloses a method, according to which ammonia is removed from malodorous gases prior to burning said gases, which results in a remarkable decrease in the nitrogen oxide content of the flue gas generated in the burning. According to said patent, ammonia is preferably removed by washing the gases in order to bind the ammonia from the gases. The washing liquid may preferably be a bisulphite solution originating from the wash of flue gases generated in the burning of gases. Another applicable solution from the chemical pulp mill, which solution has a pH in the neutral or acid range, may be used as well, such as acid bleaching effluent or waste acid from a chlorine dioxide plant.

WO-A-99/47746 discloses a process of reducing nitrogen oxide emissions at a pulp mill in the combustion of odorous gases. These gases contain ammonia and are generated in different process steps. Ammonia is separated from the odorous gases by washing them with water, and after that the ammonia has :to be further separated from the washing solution before further processing or use. The other way to separate ammonia from the odorous gases is to use a molecular sieve.

USA-4 336 102 discloses a method for the recovery of Ammonia from the spent ammonia-base sulfite liquor. Sulfite pulping liquor is treated in a steam stripper, and the vapor formed therein comprises ammonia, water and sulfur:compounds. The vapor is condensed so that a distillate formed contains ammonia in: water. The distillate is further treated in a cation exchange column with sulfurous acid in order to produce a solution of ammonium sulfite, which is fortified with sulfur dioxide to produce an ammonia-base sulfite cooking liquor concentrate.

US-A-5 450 892 discloses a process in which sulfur compounds, hydrogen sulfide and methyl mercaptan, are removed from condensate stripper off gases by treating in a scrubber with an alkaline liquid, such as white liquor. The gases thus treated are combusted.

The object of the present invention is to intensify the recovery of ammonia from stripper gases and other ammonia-containing gases at a chemical pulp mill. Especially the object is to recover the ammonia in such a way that it may be used at the mill at a location, where ammonia-containing chemical is needed.

To achieve these objects, the present invention relates to a method for recovering ammonia from ammonia-containing material flows of a chemical pulp mill in order to decrease nitrogen oxide emissions at the mill, and a characteristic feature of the invention is that the pH of ammonia-containing material flow originating from steam stripping of condensates is adjusted by means of alkali to a value of over 10 and is made into contact with steam/vapor in order to separate ammonia from the material flow. The recovered ammonia is utilized as a reducing chemical in a combustion device in the cellulose pulp mill in a way known per se to reduce detrimental nitrogen oxide emissions of the mill.

Typically, the ammonia-containing material flow is a solution, which is formed, when discharge gases coming from the condensate steam stripper are washed with an acid solution. Alternatively, the ammonia-containing material flow may be a solution, which is formed in liquefaction of methanol from the discharge gases of a condensate steam stripper.

Prior to washing or methanol liquefaction, the discharge gas from a condensate steam stripper may be augmented with other gas flows of the chemical pulp mill having a corresponding composition, such as non-condensable gases (NCG) from other locations at the mill.

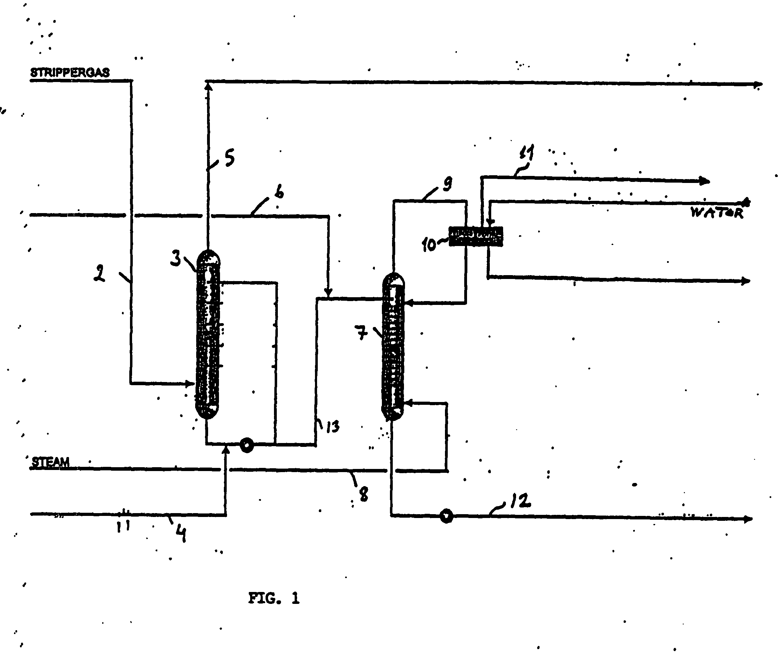

In the following, the invention is explained in more detail with reference to the appended Figure 1 illustrating a preferred embodiment of the invention.

Figure 1 illustrates a process, in which ammonia in the discharge gas of a steam stripper for condensates is removed in a scrubber. The discharge gas is led via line 2 into a scrubber 3. Washing liquid, which preferably is a solution having a pH lower than 6, preferably lower than 5, is led into the scrubber via line 4. An especially preferred solution is bisulphite solution obtained from the washing of flue gases coming from the combustion devices of a chemical pulp mill, whereby a reaction (1)

(1) 2 NH₃ + NaHSO₃ + H₂O -> (NH₄)₂SO₃ + NaOH

forms a solution containing ammonium sulphite.

Other preferred washing liquids are e.g. filtrates from the bleaching plant and waste acid from the chlorine dioxide plant.

The ammonia scrubber 3 discharges in line 5 essentially ammonia-free discharge gas, which is led to methanol liquefaction. The methanol is then burned in a combustion device of the chemical pulp mill, such as a lime kiln or a combustion device for malodorous gases, in which the feed of metanol does not increase nitrogen oxide emissions of combustion because of ammonia removal.

The ammonia-containing solution is discharged from the scrubber 3 via line 13, the pH of said solution being adjusted to a value over 10, preferably over 11 by adding alkali via line 6. The alkali may preferably be a sodium hydroxide solution or weak white liquor.

The ammonia-containing solution is taken to the upper part of a stripping column 7, wherefrom the solution flows downwards. The lower part of the column, in turn, receives steam/vapor via line 8, which steam when flowing upwards meets the ammonia-containing solution, whereby ammonia moves from liquid phase to gaseous phase. Said pH adjustment contributes to separation of ammonia from the solution to the steam.

The gas leaving the ammonia stripper 7 in line 9 contains the recovered ammonia, which is preferably used as a reducing chemical in a recovery boiler or other combustion device in a chemical pulp mill, wherein it reacts with nitrogen oxides of flue gases in a SNCR method known per se, whereby nitrogen and water are formed. The ammonia is led into a condenser 10 and via line 11 into a recovery boiler or other combustion device.

The feeding of ammonia into a recovery boiler is usually effected in a front chamber of the boiler, preferably at the level of the bull nose or at several different levels starting from the level of the bull nose. The ammonia may also be added from a level where the temperature of flue gases is less than 1050 °C, preferably less than 950 °C, typically 850-950 °C.

The feed may be effected in form of ammonia gas pressurized together with stripper vapor. Ammonia may also be withdrawn from the stripper by means of a steam ejector and injected into the boiler with steam. Also, the ammonia may be liquefied, mixed with water and pumped into the boiler.

The ammonia may be utilized as a chemical for reducing the amount of nitrogen oxide in flue gases also by means of the so-called SCR-method.

The solution 12 obtained from the bottom of the stripper is preferably led into the furnace of the recovery boiler, in which useful chemicals contained therein can be recovered.

Instead of separating the ammonia by washing discharge gases of the condensate stripper, the gases may first be treated to liquefy the methanol and remove ammonia from the methanol. In such a case, the pH of the liquefied methanol is adjusted to a value over 10, preferably over 11, as described in the above in connection with a bisulphite solution, and the methanol is stripped with steam for separating ammonia therefrom. The ammonia thus obtained may be utilized as described earlier.

While only some preferred embodiments of the method according to the invention have been described in the above, the invention covers all modifications and variations inside the scope of the invention defined by the appended claims.

## Claims

1. A method for recovering ammonia from ammonia-containing material flows of a chemical pulp mill in order to decrease nitrogen oxide emissions from the mill, **characterized in that** the pH of ammonia-containing material flow originating from steam stripping of condensates is adjusted by means of alkali to a value of over 10 and is made into contact with steam to separate ammonia from the material flow.

2. A method according to claim 1, **characterized in that** the recovered ammonia is utilized as a chemical in a combustion device in the chemical pulp mill in a way known per se in order to prevent the formation of detrimental nitrogen oxides.

3. A method according to claim 1 or 2, **characterized in that** the ammonia-containing flow is a solution formed in the washing of discharge gases from a condensate steam stripper by means of an acid solution.

4. A method according to claim 1 or 2, **characterized in that** the ammonia-containing flow is a solution formed in methanol liquefaction of discharge gases from a condensate steam stripper.

5. A method according to any of the preceding claims, **characterized in that** the pH of the ammonia-containing material flow is adjusted by means of weak white liquor.

6. A method according to claim 3, **characterized in that** the acid washing solution is a bisulphite solution generating from the washing of flue gases.

7. A method according to any of the preceding claims, **characterized in that** the material flow generating from the steam stripper is augmented with other material flows of the chemical pulp mill having a corresponding composition.

## Patentansprüche

1. Verfahren zur Rückgewinnung von Ammoniak aus ammoniakhaltigen Materialströmen einer Zellstofffabrik, um Stickoxidemissionen aus der Fabrik zu verringern, **dadurch gekennzeichnet, dass** der pH des ammoniakhaltigen Materialstroms, der vom Dampfstripping von Kondensaten stammt, durch Alkali auf einen Wert von über 10 eingestellt wird und mit Dampf kontaktiert wird, um Ammoniak aus dem Materialstrom abzuscheiden.

2. Verfahren nach Patentanspruch 1, **dadurch gekennzeichnet, dass** das rückgewonnene Ammoniak als Chemikalie in einer Verbrennungsvorrichtung in der Zellstofffabrik auf eine als solche bekannte Weise verwendet wird, um die Bildung schädlicher Stickoxide zu verhindern.

3. Verfahren nach Patentanspruch 1 oder 2, **dadurch gekennzeichnet, dass** es sich beim ammoniakhaltigen Strom um eine Lösung handelt, die bei der Wäsche von Abgasen eines Kondensat-Dampfstrippers mittels einer sauren Lösung gebildet wird.

4. Verfahren nach Patentanspruch 1 oder 2, **dadurch gekennzeichnet, dass** es sich beim ammoniakhaltigen Strom um eine Lösung handelt, die bei der Methanolverflüssigung von Abgasen eines Kondensat-Dampfstrippers gebildet wird.

5. Verfahren nach einem der vorhergehenden Patentansprüche, **dadurch gekennzeichnet, dass** der pH des ammoniakhaltigen Materialstroms durch schwache Weißlauge eingestellt wird.

6. Verfahren nach Patentanspruch 3, **dadurch gekennzeichnet, dass** es sich bei der sauren Waschlösung um eine Bisulfitlösung handelt, die aus der Wäsche von Rauchgasen stammt.

7. Verfahren nach einem der vorhergehenden Patentansprüche, **dadurch gekennzeichnet, dass** der vom Dampfstripper stammende Materialstrom mit anderen Materialströmen der Zellstofffabrik angereichert ist, die eine entsprechende Zusammensetzung haben.

## Revendications

1. Procédé de récupération d'ammoniac de flux de matériaux contenant de l'ammoniac d'une usine de pâte chimique afin de diminuer les émissions d'oxyde d'azote de l'usine, **caractérisé en ce que** le pH du flux de matériaux contenant de l'ammoniac provenant de la distillation à la vapeur de produits de condensation est ajusté au moyen d'alcalis à une valeur supérieure à 10 et est mis au contact de vapeur pour séparer l'ammoniac du flux de matériaux.

2. Procédé selon la revendication 1, **caractérisé en ce que** l'ammoniac récupéré est utilisé en tant que produit chimique dans un dispositif de combustion dans l'usine de pâte chimique d'une manière connue en soi afin d'empêcher la formation d'oxydes d'azote nuisibles.

3. Procédé selon la revendication 1 ou la revendication 2, **caractérisé en ce que** le flux contenant de l'ammoniac est une solution formée dans le lavage de gaz de refoulement d'un distillateur à vapeur de produits de condensation au moyen d'une solution acide.

4. Procédé selon la revendication 1 ou la revendication 2, **caractérisé en ce que** le flux contenant de l'ammoniac est une solution formée dans la liquéfaction de méthanol de gaz de refoulement d'un distillateur à vapeur de produits de condensation.

5. Procédé selon l'une quelconque des revendications précédentes, **caractérisé en ce que** le pH du flux de matériaux contenant de l'ammoniac est ajusté au moyen d'une liqueur blanche faible.

6. Procédé selon la revendication 3, **caractérisé en ce que** la solution de lavage acide est une solution de bisulfite produite par le lavage des gaz de combustion.

7. Procédé selon l'une quelconque des revendications précédentes, **caractérisé en ce que** le flux de matériaux produit par le distillateur à vapeur est augmenté et **en ce que** d'autres flux de matériaux de l'usine de pâte chimique présentent une composition correspondante.
